# DEMANDE DE BREVET EUROPEEN

(11) **EP 2 519 005 A1**
(43) Date de publication de la demande: **31.10.2012**
(21) Numéro de dépôt: 11305515.6
(22) Date de dépôt: 29.04.2011
(51) Int. Cl.: H04N 7/173, H04N 5/44

(54) **Procédé et systeme d'affichage des informations interactives d'un contenu multimedia interactif**

(71) Demandeur: Alcatel Lucent, 75007 Paris (FR)
(72) Inventeur: Cabasse, Gilbert, 29228 Brest (FR); Bonnaud, Fabrice, 29228 Brest (FR)
(74) Mandataire: Demulsant, Xavier

(57) **Abrégé**

Procédé de gestion d'un contenu multimédia interactif (1) destiné à être affiché sur l'écran d'un téléviseur (20), comprenant les étapes suivantes :
- séparation des informations interactives comprises dans le contenu multimédia interactif (1) ;
- communication des dites informations interactives (3) à un terminal utilisateur (30) ;
- communication, au téléviseur (20), du contenu multimédia interactif (1) dépourvu des informations interactives (3).

## Description

La présente invention se rapporte au media enrichi interactif.

On désigne ci-après par «téléviseur» tout récepteur apte à reproduire au moins des éléments visuels d'un contenu multimédia émis ou diffusé par un émetteur.

Par ailleurs, on appelle ci-après « télévision», tout procédé/système selon le(s)quel(s) s'opère une chaîne de diffusion d'un contenu multimédia destiné à être reçu et affiché par un téléviseur. En particulier, la télévision interactive est celle permettant la diffusion d'un contenu multimédia interactif. Un contenu multimédia interactif comprend des services interactifs permettant au téléspectateur de faire connaître une réaction personnelle et/ou d'exercer une influence sur ce qu'il voit, entend ou reçoit.

Un contenu multimédia interactif comprend, en outre du contenu audio/vidéo, des informations interactives. Ces informations interactives sont des informations additionnelles qui viennent enrichir le contenu audio/vidéo du flux de télévision habituel pour différentes motivations, par exemples, économiques (renseignements sur une offre d'un produit/service: adresse d'un site Internet, courriel, numéros de téléphone par exemple), ou informatives (commentaires/questions/réponses liés à un certain programme en diffusion, actualités, photos, résultats d'un certain évènement, noms des joueurs d'une équipe de Football par exemple).

L'affichage du contenu vidéo et des informations interactives est généralement fait d'une manière simultanée. Les images du contenu vidéo ne sont donc pas exclusives sur l'écran du téléviseur.

Il en résulte que, dans certains cas, une partie du contenu vidéo en lecture se trouve cachée par les informations interactives.

Cependant, cet affichage superposé des informations interactives et des images vidéo nécessite une mobilisation excessive de l'attention du téléspectateur afin de saisir les deux informations (c.à.d. les images vidéo et les informations interactives) tout en réussissant une lecture rapide à l'écran du téléviseur. Des tâches exigeant une charge cognitive élevée (mémoriser un numéro de téléphone, une adresse web, les conditions d'une offre commerciale par exemple) ne sont pas appropriées à l'usage de la télévision, généralement associée à la détente.

Dans d'autres cas, une partie de l'écran du téléviseur peut être allouée uniquement à l'affichage des informations interactives (c.à.d. partager l'écran du téléviseur en deux ou plusieurs parties dont l'une affiche les informations interactives relatives à un contenu vidéo en lecture dans une autre partie de l'écran).

Néanmoins, le fait de partager l'écran du téléviseur en plus d'une fenêtre conduit à la réduction des dimensions de ces fenêtres. Il en résulte que les informations affichées (c.à.d. les images vidéo et les informations interactives) seront de tailles réduites, et donc moins visibles que lorsqu'elles sont en plein écran.

Les méthodes connues de gestion des contenus multimédia interactifs diffusés à la télévision sont imparfaites, notamment, parce que, étant liées au contenu vidéo d'un certain programme en diffusion, les informations interactives ne sont plus disponibles au téléspectateur dès la fin de diffusion de ce programme, ou suite à tout changement de chaine (zapping). Même si elles sont rendues disponibles, d'une manière ou d'un autre, le téléspectateur est contraint de se rappeler sur quelle chaine elles ont été diffusées.

Un objet de la présente invention est de remédier aux inconvénients précités.

Un autre objet de la présente invention est d'améliorer l'utilité des contenus multimédia interactifs pour le téléspectateur.

Un autre objet de la présente invention est de faciliter l'utilisation, et favoriser le confort et l'appréhension des informations interactives des contenus média enrichis.

Un autre objet de la présente invention est d'améliorer le rendement des investissements publicitaires à la télévision.

Un autre objet de la présente invention est de permettre une consommation collective via les réseaux sociaux des informations interactives des contenus multimédia.

A cette fin, l'invention se rapporte, selon un premier aspect, à un procédé de gestion d'un contenu multimédia interactif destiné à être affiché sur l'écran d'un téléviseur, comprenant les étapes suivantes:
- séparation des informations interactives comprises dans le contenu multimédia interactif ;
- communication des dites informations interactives à un terminal utilisateur ;
- communication, au téléviseur, du contenu multimédia interactif dépourvu des informations interactives.

L'invention se rapporte, selon un deuxième aspect, à un adaptateur comprenant un moyen de sélection permettant de distinguer des informations interactives comprises dans un flux de contenu multimédia interactif à son entrée, et une interface de communication permettant de communiquer les dites informations interactives à un terminal utilisateur.

L'invention propose, selon un troisième aspect, un produit programme d'ordinateur implémenté sur un support mémoire, susceptible d'être mis en oeuvre au sein d'une unité de traitement informatique et comprenant des instructions pour la mise en oeuvre du procédé résumé ci-dessus.

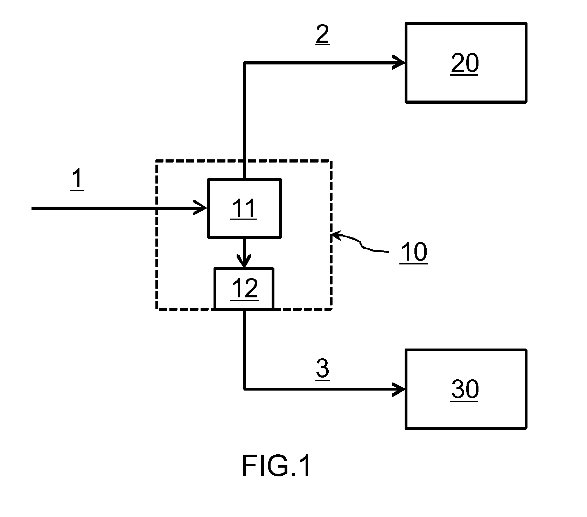

D'autres caractéristiques et avantages de l'invention apparaîtront plus clairement et de manière concrète à la lecture de la description ci-après de modes de réalisation préférés, laquelle est faite en référence à la figure 1 annexée qui illustre schématiquement une représentation fonctionnelle d'un mode de réalisation.

Sur la figure 1 est représenté un adaptateur **10** (aussi désigné par le vocable décodeur, récepteur numérique ou STB pour Set-top Box) recevant un flux de contenu multimédia interactif **1** préalablement destiné à être affiché sur l'écran du téléviseur **20.** Ce flux peut provenir en temps réel d'un câble Ethernet (IPTV par exemple), d'une antenne satellite ou VHF/UHF, d'une ligne téléphonique, d'une fibre optique, ou plus généralement d'un moyen de transmission local/distant de contenus numériques.

L'adaptateur **10** est tout moyen permettant de transformer un signal à son entrée en un contenu qui peut être affiché sur l'écran du téléviseur **20.**

Le contenu multimédia interactif **1** comprend des informations interactives. Un module de sélection **11,** compris dans l'adaptateur **10,** permet
- de distinguer/séparer les informations interactives du flux de contenu multimédia interactives **1 ;** pour les
- communiquer, via une interface de communication **12,** à un terminal utilisateur **30.**

Un ordinateur portable/fixe, un Laptop, un Smartphone, une tablette PC, un assistant numérique personnel (ou PDA pour « Personal Digital Assistant ») sont des exemples du terminal utilisateur **30.** Notamment, le terminal utilisateur **30** est pourvu d'un écran d'affichage permettant d'afficher les informations interactives **3** qui lui sont transmises depuis l'adaptateur **10.**

L'interface de communication **12,** de préférence à courte portée (Bluetooth™, HiperLAN, Wireless LAN, Home RF, WiFi, Ethernet par exemple), est agencée pour être détectable par le terminal utilisateur **30,** à laquelle il peut se connecter.

Avantageusement, l'interface de communication **12** est configurée pour pouvoir communiquer avec plus d'un terminal utilisateur **30** (c.à.d. dans le cas d'une diffusion simultanée des informations interactives 3 pour plus d'un terminal utilisateur **30).**

Il en résulte qu'un dialogue est établi entre l'adaptateur **10** et le terminal utilisateur **30** au cours duquel l'adaptateur **10** transmet les informations interactives - identifiées dans le flux de contenu multimédia **1 -** au terminal utilisateur **30.**

Le contenu multimédia interactif **1,** dépourvu des informations interactives **3,** (c'est-à-dire le contenu audio/vidéo **2** du flux de télévision habituel) est transmis au téléviseur **20,** tandis que les informations interactives sont transmises au terminal utilisateur **30.**

Par conséquent, le contenu multimédia interactif **1** est reparti entre le téléviseur **20** et le terminal utilisateur **30 :**
- les informations interactives **3** sont affichées sur l'écran du terminal utilisateur **30 ;**
- et le reste **2** du contenu multimédia interactif **1** (notamment, le contenu vidéo et/ou audio) est affiché sur l'écran du téléviseur **20.**

Il en résulte qu'avantageusement le téléviseur **20** est utilisé uniquement pour l'affichage du contenu multimédia interactif **1** dépourvu des informations interactives **3.**

Avantageusement, les informations interactives peuvent être consultées sur le terminal utilisateur **30** simultanément avec le programme (c'est-à-dire, le contenu audio/vidéo), sans perturber l'affichage du contenu vidéo sur l'écran du téléviseur **20.**

En variante, l'adaptateur **10** transmet, au terminal utilisateur **30,** une copie des informations interactives **3** identifiées dans le flux de contenu multimédia interactif **1.** Ces informations interactives **3** seront, ainsi, aussi affichées sur l'écran du téléviseur **20.**

Le terminal utilisateur **30** comprend une application logicielle permettant d'afficher les informations interactives **3** reçues depuis l'adaptateur **10.** Cette application logicielle permet, en outre, d'enregistrer (sur un support mémoire interne/externe, une base de données distante, un site Web par exemple) les informations interactives reçues. L'utilisateur peut ainsi les consulter à tout autre moment.

A partir d'une interface graphique de l'application logicielle, le téléspectateur peut, par exemple, rechercher, afficher, modifier, supprimer, ou regarder une information interactive déjà stockée sur un support mémoire accessible depuis le terminal utilisateur **30.** Avantageusement, la disposition locale (c'est-à-dire, sur une mémoire du terminal utilisateur **30)** des informations interactives permet d'avoir des réponses rapides aux requêtes utilisateur.

En variante ou en combinaison, l'adaptateur **10** transmet, en plus des informations interactives, au terminal utilisateur **30,** des données concernant le flux de contenu multimédia interactif **1.** Ces données peuvent être récupérées depuis le guide de programme électronique (ou, en anglais, EPG pour Electronic Program Guide) associé au programme en diffusion. Ces données permettent, notamment, de mieux caractériser les informations interactives **3 :** le nom du programme correspondant, catégorie (publicité, actualité par exemple), l'heure de diffusion, des mots clés relatives au contenu des informations interactives (marque, intitulé, durée par exemple).

De préférence, l'application logicielle comprise dans le terminal utilisateur **30** utilise/coordonne avec d'autres services/moyens (de messagerie électronique, de géolocalisation, de navigation Web, de communication par exemple) proposés par ce terminateur utilisateur **30.** A titre d'exemples non limitatifs, cette application permet
- d'appeler un contact en utilisant un numéro de téléphone compris dans une information interactive ;
- d'envoyer un courriel en utilisant une adresse électronique comprise dans une information interactive ;
- de localiser un adresse, ou trouver l'itinéraire vers une adresse comprise dans une information interactive ;
- de visiter un site Web dont l'adresse est comprise dans une information interactive.

De préférence, l'application logicielle installée sur le terminal utilisateur **30** comprend une interface de communication avec les réseaux sociaux (Facebook, MySpace, Twitter, Google Buzz par exemple) et les plateformes de partage de contenus multimédia (Youtube, DailyMotion par exemple) permettant le téléspectateur de se voir proposer des informations interactives appréciées par ses amis ou de leur en suggérer.

Le procédé et le système qui viennent d'être décrits présentent un certain nombre d'avantages. Ils permettent en effet
- de revoir des informations interactives dont on s'est rendu compte de l'importance après-coup ou lorsqu'on a été occupé au moment de sa diffusion ;
- l'affichage des informations interactives sur l'écran d'un terminal utilisateur **30** qui se trouve, généralement, plus à proximité de l'utilisateur que le téléviseur **20 ;**
- lorsque plusieurs utilisateurs sont en face d'un même téléviseur, chaque utilisateur équipé d'un terminal utilisateur peut consulter les informations interactives de son choix sans perturber les autres téléspectateurs ;
- d'améliorer le rendement d'un contenu multimédia publicitaire : un affranchissement par rapport à la grille horaire (le téléspectateur peut regarder le contenu multimédia publicitaire ou au moins ses informations interactives à l'heure qui lui convient). Le fait de rendre disponible à tout moment les détails d'une offre commerciale (adresse du magasin, taux de réduction, adresse du site Web, avantages de l'offre par exemple) favorise un meilleur rendement ;
- de changer (zapper) d'une chaine à une autre tout en regardant les informations interactives relatifs à un contenu multimédia en diffusion sur une autre chaine ;
- d'assurer toujours un affichage en plein écran du contenu vidéo sur l'écran du téléviseur **20.**

Il est à noter que les termes « module » et « interface » recouvrent ici tout moyen intégrant un processeur programmé pour assurer une ou plusieurs fonctions prédéterminées, ou toute application logicielle (programme ou sous-programme, plugin) implémentée sur un processeur, indépendamment ou en combinaison avec d'autres applications logicielles.

## Revendications

1. Procédé de gestion d'un contenu multimédia interactif (1) destiné à être affiché sur l'écran d'un téléviseur (20), comprenant les étapes suivantes :
- séparation des informations interactives comprises dans le contenu multimédia interactif (1) ;
- communication des dites informations interactives (3) à un terminal utilisateur (30) ;
- communication, au téléviseur (20), du contenu multimédia interactif (1) dépourvu des informations interactives (3).

2. Procédé selon la revendication 1, **caractérisé en ce qu'**il comprend en outre une étape de communication, au terminal utilisateur (30), des données récupérées depuis un guide de programme électronique associé au contenu multimédia interactif.

3. Procédé selon l'une quelconque des revendications 1 ou 2, **caractérisé en ce que** le terminal utilisateur (30) comprend une application logicielle permettant l'affichage des informations interactives (3).

4. Procédé selon l'une quelconque des revendications précédentes, **caractérisé en ce qu'**il comprend, en outre, une étape d'enregistrement des informations interactives (3) communiquées au terminal utilisateur (30).

5. Un adaptateur (10) comprenant
- un moyen de sélection (11) permettant de distinguer des informations interactives (3) comprises dans un flux de contenu multimédia interactif (1) à son entrée;
- une interface de communication (12) permettant de communiquer les dites informations interactives à un terminal utilisateur (30).

6. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications 1 à 5.
